# EUROPEAN PATENT APPLICATION

(11) **EP 2 367 082 A1**
(43) Date of publication of application: **21.09.2011**
(21) Application number: 10002920.6
(22) Date of filing: 19.03.2010
(51) Int. Cl.: G05B 19/042

(54) **Heating system with cascaded boiler modules**

(71) Applicant: Honeywell Technologies Sarl, 1180 Rolle (CH)
(72) Inventor: Pastori, Marco Andrea, 20010 Vanzago (MI) (IT); Langius, Gerwin, 7772ZB Hardenberg, Ov. (NL); Moiana, Emanuele, 23867 Suello (LC) (IT); Bakos, Radovan, 034 95 Likavka (SK); Crippa, Gianluigi, 23897 Vigano (LC) (IT)
(74) Representative: Sturm, Christoph

(57) **Abstract**

Heating system (10) comprising a plurality of boiler modules, wherein each boiler module (11, 12, 13, 14, 15, 16) comprises at least one burner, at least one burner control unit (17, 18) for controlling the respective burner and one man machine interface unit (19) being connected to the or each burner control unit (17, 18); wherein the boiler modules (11, 12, 13, 14. 15, 16) are cascaded in such a way that all man machine interface units (19) are connected in series, whereby one of said man machine interface units (19) serves as master interface unit and whereby the other man machine interface units (19) serve as slave interface units; wherein the heating system performs an automatic configuration of the cascaded boiler modules (11, 12, 13, 14, 15, 16) after establishing the cascaded connection of the same in such a way that each man machine interface unit (19) determines the number of burner control units (17, 18) being connected the respective man machine interface unit (19), that each man machine interface unit determines the presence of a neighbouring machine interface unit being connected the respective man machine interface unit and that the master interface unit determines the total number of burner control units (17, 18) in the heating system. (Figure 1)

## Description

The invention relates to a heating system.

A heating system comprises a boiler module. A boiler module of a heating system comprises at least one burner, at least one burner control unit for controlling the respective burner and one man machine interface unit being connected to or each burner control unit. In case of a boiler module having one burner, the boiler module comprises one burner control unit controlling said one burner and one machine interface unit being connected to said one burner control unit. In case of a boiler module having two burners, the boiler module comprises two burner control unit each controlling one of said two burners and one machine interface unit being connected to said two burner control units. It is also possible that a boiler module comprises more than two burners and a respective number of burner control units.

Such a boiler module of a heating system has a specific heating capacity which is determined by the heating capacity of the or each burner of the boiler module. In case the heating capacity of a boiler module is not sufficient for the concrete application of the heating system, it is necessary to use a boiler module having a greater heating capacity. Another option would be to use a plurality of boiler modules in a heating system in order to increase heating capacity, improve efficiency, add redundancy and/or reduce cost of the installation. However, when using a plurality of boiler modules in a heating system, installation setup and configuration of the heating system as well as data exchange between the individual boiler modules is problematical.

Against this background, a novel heating system is provided.

According to the present invention the heating system comprises a plurality of boiler modules. Each boiler module comprises at least one burner, at least one burner control unit for controlling the respective burner and one man machine interface unit being connected to or each burner control unit. The boiler modules are cascaded in such a way that all man machine interface units are connected in series, whereby one of said man machine interface units being connected in series serves as master interface unit and whereby the other man machine interface units serve as slave interface units. The heating system performs an automatic configuration of the cascaded boiler modules after establishing the cascaded connection by cabling the boiler modules, whereby the automatic configuration is performed in such a way that each man machine interface unit determines the number of burner control units being connected the respective man machine interface unit, that each man machine interface unit determines the presence of a neighbouring machine interface unit being connected the respective man machine interface unit, and that the master interface unit determines the total number of burner control units in the heating system.

The heating system of the present invention allows an easy and automatic configuration of the overall installation. Further on, the heating system of the present invention provides an easy approach to problem solving linked to the serial structure of the cascaded boiler modules by removing a possible failing boiler module from the cascade without stopping the overall functionality. In addition, the heating system of the present invention allows a flexible hierarchical cascade definition due to the fact that every boiler can be defined as master or slave via simple cabling and automatic configuration.

According to a preferred embodiment of the present invention, each man machine interface unit comprises a memory cache. This allows to overcome communication constrains between boiler modules in the cascade.

According to claims 15 and 16 the present invention covers also a heating system having only one boiler module.

Preferred developments of the invention are provided by the dependent claims and the description which follows. Exemplary embodiments are explained in more detail on the basis of the drawing, in which:
- Figure 1: shows a schematic structure of a first embodiment of a heating system according to the invention comprising six boiler modules each having two burner control units, whereby physical addresses of burner control units are shown;
- Figure 2: shows the schematic structure of Figure 1 together with interface unit messages being exchanged;
- Figure 3: shows a detail of Figure 2;
- Figure 4: shows the schematic structure of Figure 1 with logical addresses of burner control units;
- Figure 5: shows a schematic structure of a second embodiment of a heating system according to the invention comprising six boiler modules each having one burner control unit, whereby logical addresses of burner control units are shown;
- Figure 6: a schematic structure obtained from the heating system according to Figure 1 by removing one boiler module and boiler module of the boiler modules; and
- Figure 7: a schematic structure obtained from the heating system according to Figure 1 by changing cabling of the boiler modules and changing selection of the master DSP.

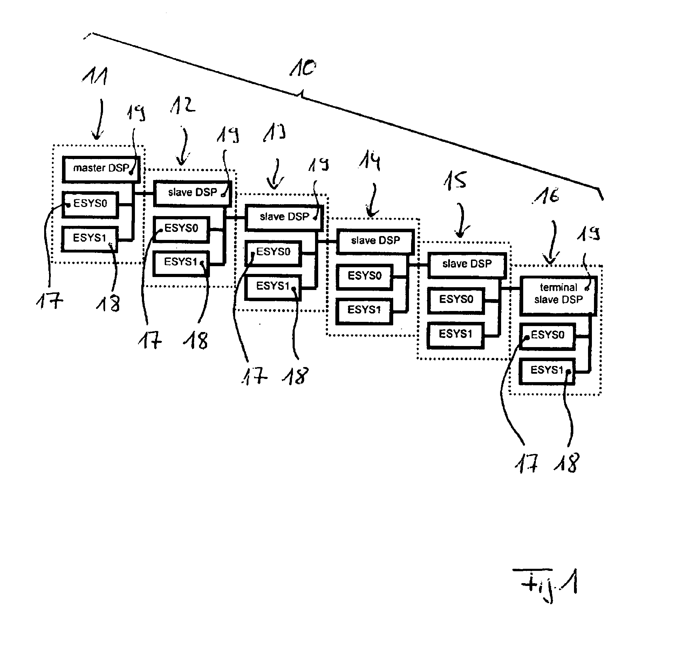

Figure 1 shows a schematic structure of a first embodiment of a heating system 10 according to the invention comprising a plurality of boiler modules. The heating system 10 shown in Figure 1 comprises six boiler modules 11, 12, 13, 14, 15 and 16. It should be noted, that the number of six boiler modules is only an example. The heating system can comprise less than six boiler modules or more than six boiler modules.

Each boiler module 11 to 16 comprises at least one burner (not shown), at least one burner control unit for controlling the respective burner and one man machine interface unit being connected to the or each burner control unit.

Within the heating system 10 shown in Figure 1 each boiler module 11 to 16 comprises two burner control units 17 and 18. Each burner control unit 17 and 18 controls one burner (not shown) of the respective boiler module. The burner control units 17 and 18 of each boiler module 11 to 16 are connected to the man machine interface unit 19 of the respective boiler module 11 to 16. It should be noted, that the number of two burner control units per boiler module is only an example. The boiler modules can comprise less than two burner control units or more than two burner control units.

A man machine interface unit 19 is in Figure 1 also called "DSP". A burner control unit 17, 18 is in Figure 1 also called "ESYS". According to Figure 1, within each boiler module 11 to 16 each burner control unit 17, 18 is characterized by a defined physical address. A first burner control unit 17 of each boiler module 11 to 16 has a first physical address, especially the physical address "0", and a second burner control unit 18 has a second physical address, especially the physical address "1 ". If there is a third burner control unit within each boiler module, said third burner control unit would have a third physical address, especially the physical address "2".

The default physical address of a burner control unit 17, 18 is physical address "0". To set physical address "1" or any other physical address needed, a combination of inputs of the respective burner control unit are forced to a predefined state by cabling.

The burner control units 17 and 18 of each boiler module 11 to 16 are connected to the man machine interface unit 19 of the respective boiler module 11 I to 16 by cabling or wiring, especially by using a bus cabling system.

The boiler modules 11 to 16 of the heating system 10 are cascaded in such a way that all man machine interface units 19 are connected in series, whereby one of said man machine interface units 19 serves as master interface unit and whereby the other man machine interface units serve as slave interface units. The master interface unit is in Figure 1 called "master DSP". The slave interface units are in Figure 1 called "slave DSP". One of said slave interface units serves as terminal slave interface unit which is in Figure 1 called "terminal slave DSP". The man machine interface units 19 of the boiler modules 11 to 16 are connected in series by cabling or wiring, especially by using a bus cabling system.

The heating system 10 shown in Figure 1 performs an automatic configuration of the cascaded boiler modules 11, 12, 13, 14, 15 and 16 after establishing the cascaded connection. The automatic configuration needs especially to be launched when the heating system 10 is being commissioned for the first time, when there are changes in count of boiler modules 11 to 16, when there are changes in count of burners control units 17 and 18, and when there are changes in the order of the boiler modules 11 to 16 within the cascade.

Said automatic configuration is launched or started from the man machine interface unit 19 serving as master interface unit which is also called "master DSP", whereby the master interface unit "master DSP" is connected to no other man machine interface unit 19 upward in cascade.

To invoke automatic configuration, a user has e.g. to press a certain button combination at the master interface unit which is also called "master DSP". The "master DSP" sends a request signal of automatic configuration. All man machine interface units 19 catching this request signal become a "slave DSP". As this request signal is forwarded, each "slave DSP" starts performing auto configuration.

Said automatic configuration of the heating system 10, namely of the cascaded boiler modules 11 to 16, is performed in such a way that each man machine interface unit 19 determines the number of burner control units 17, 18 being connected to the respective man machine interface unit 19, and that the master interface unit "master DSP" determines the total number of burner control units 17, 18 in the heating system.

Preferably, said automatic configuration of the heating system 10, namely of the cascaded boiler modules 11 to 16, is performed in such a way that the master interface unit "master DSP" further determines the number of man machine interface units 19 being connected in series and the position of the same within the cascade.

Said automatic configuration of the heating system 10, namely of the cascaded boiler modules 11 to 16, is described below in greater detail. The automatic configuration is preferably performed in two subsequent steps.

Within a first step of the automatic configuration, each man machine interface unit 19 determines the number of burner control units 17, 18 being connected the respective man machine interface unit 19 and preferably further if there is a man machine interface unit 19 being positioned beneath in the cascade.

The first step of automatic configuration will assume that there is maximal number of burner control units 17, 18 installed in each boiler module and all man machine interface units 19 start to check their presence. Each man machine interface unit 19 checks also the presence of a respective "slave DSP" in the cascade beneath. The last man machine interface unit 19, which does not detect another machine interface unit 19 beneath in the cascade, becomes the so called "terminal slave DSP".

If a reading message is not answered, it will preferably be repeated multiple times before considering a burner control unit 17, 18 as not connected.

The man machine interface unit 19 of each boiler module 11 to 16 must check all possible addresses and must further check the presence of a respective "slave DSP".

The highest detected address +1 is assumed to be the count burner control units 17, 18. Gaps in addressing space are reserved. For example if burner control unit 17 of boiler module 12 is not available but burner control unit 18 of boiler module 12 is responding, two burner control units are detected for boiler module 12. In this case after automatic configuration burner control unit 17 of boiler module 12 will be marked with communication error.

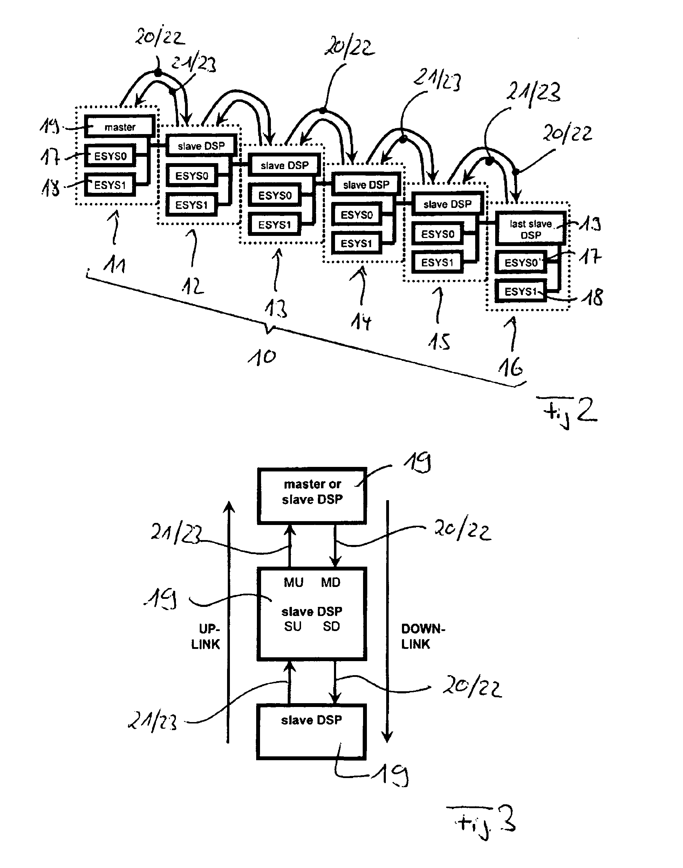

Within a subsequent second step of the automatic configuration, downlink interface unit messages 20 (see Figures 2 and 3) and uplink interface unit messages 21 (see Figures 2 and 3) are exchanged between the cascaded man machine interface units 19.

The messages 20, 21 are exchanged in such a way that each man machine interface unit 19 except for the terminal slave interface unit "terminal slave DSP" sends a downlink interface unit message 20 to the man machine interface unit 19 being positioned ultimately beneath in the cascade, wherein said downlink interface unit message 20 corresponds to the number of burner control units 17, 18 being connected to the respective man machine interface unit 19 of the respective boiler module.

In other words, e.g. the man machine interface unit 19 of the boiler module 11 which is the "master DSP" sends to the man machine interface unit 19 of the boiler module 12 a downlink interface unit message 20 corresponding to the number (here two) of burner control units 17, 18 being connected to the man machine interface unit 19 of the boiler module 11.

Further on, each man machine interface unit 19 except for the master interface unit "master DSP" sends an uplink interface unit message 21 to the man machine interface unit 19 being positioned ultimately upward in the cascade, wherein said uplink interface unit message 21 corresponds to the sum of the number of burner control units 17, 18 being connected to the respective man machine interface unit 19 and the number of all man machine interface units 19 being positioned beneath the same in the cascade. In this principle, the "terminal slave DSP" sends upwards the number of burner control units directly connected to it, while other "slave DSP" send the received number of burner control units beneath from their respective "slaves DSP" increased by number of burner control units detected by the "slave DSP" itself.

In other words, e.g. the man machine interface unit 19 of the boiler module 12 sends to the man machine interface unit 19 of the boiler module 11 which is the "master DSP" an uplink interface unit message 20 corresponding to the number (here ten = two plus eight) of burner control units 17, 18 being connected the respective man machine interface unit 19 (here two) and to all man machine interface units 19 being positioned beneath the same in the cascade (here eight).

Within the second step of the automatic configuration additional downlink interface unit messages 22 (see Figures 2 and 3) and additional uplink interface unit messages 23 (see Figures 2 and 3) can be exchanged between the cascaded man machine interface units 19.

Preferably, each man machine interface unit 19 except for the terminal slave interface unit "terminal slave DSP" sends a downlink interface unit message 22 to the man machine interface unit 19 being positioned ultimately beneath in the cascade, wherein said downlink interface unit message 22 corresponds to the position of the respective man machine interface unit 19 in the cascade.

So, in case of the "master DSP" the data send in this message is a constant number, namely "1", while the "slave DSP" units derive this value from incoming downlink interface unit message from its respective neighbouring DSP unit positioned upward in cascade.

In other words, e.g. the man machine interface unit 19 of the boiler module 11 which is the "master DSP" sends to the man machine interface unit 19 of the boiler module 12 a downlink interface unit message 22 corresponding to the position (here one) of the same in the cascade. The man machine interface unit 19 of the boiler module 15 sends to the man machine interface unit 19 of the boiler module 16 a downlink interface unit message 22 corresponding to the position (here five) of the same in the cascade.

Further on, each man machine interface unit 19 except for the master interface unit "master DSP" sends an uplink interface unit message 23 to the man machine interface unit 19 being positioned ultimately upward in the cascade, wherein said uplink interface unit message 23 corresponds to the number of the man machine interface units 19 in the cascade.

In case of the "terminal slave DSP" this message derives from its position in the cascade, while the other "slave DSP" units are sending the value equal to incoming uplink message from its respective neighbouring unit DSP positioned downward in the cascade.

In other words, e.g. the man machine interface unit 19 of the boiler module 16 sends to the man machine interface unit 19 of the boiler module 15 an uplink interface unit message 23 corresponding to the number (here six) of machine interface units 19 in the cascade. E.g. the man machine interface unit 19 of the boiler module 12 sends to the man machine interface unit 19 of the boiler module 11 an uplink interface unit message 23 corresponding also to the number (here six) of machine interface units 19 in the cascade.

The "master DSP" will wait a certain time to let all "slave DSP" finish the automatic configuration and exchange data via the up-ldown-link messages to achieve steady state. After said wait time "master DSP" will store total count number of burner control units 17, 18. After loading parameters, the automatic configuration ends on "master DSP".

Based on the data exchanged between man machine interface units 19 by the downlink interface unit messages 20 and preferably 22 and by uplink interface unit messages 21 and preferably 23 the master interface unit "master DSP" can generate from the interface unit messages for each burner control unit 17, 18 a logical address within the cascade which increases with it's distance from the master interface unit "master DSP".

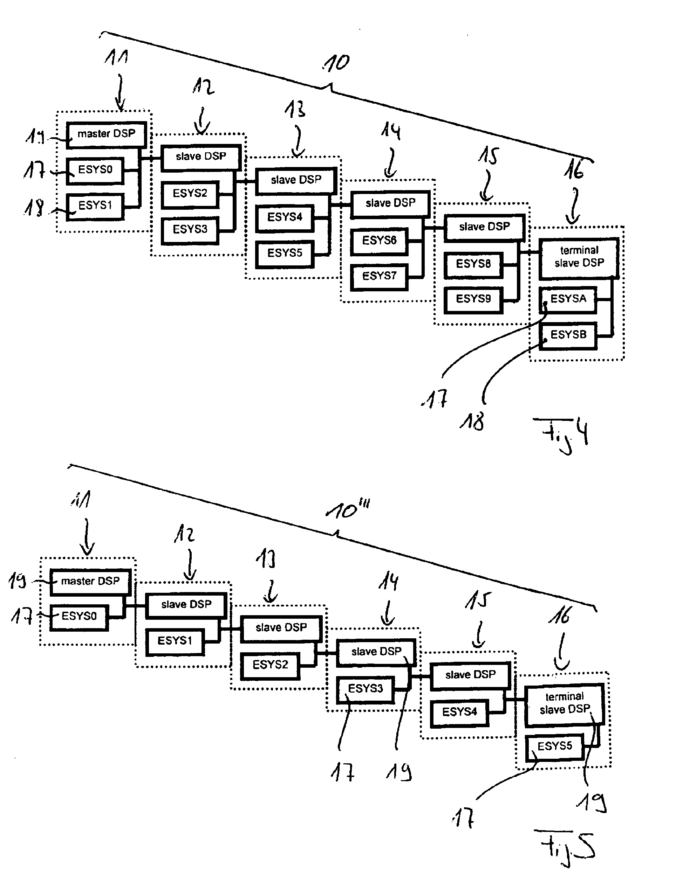

Figure 4 shows the heating system 10 with the logical addresses "0" to "9", "A" and "B" of the burner control units 17, 18, whereby the logical address "A" corresponds to "10" and the logical address "B" corresponds to "12" and so on as addresses are in the example noted in hexadecimal notation.

The master interface unit "master DSP" sends only downlink interface unit messages 20, 22 and receives only uplink interface unit messages 21, 23. The terminal slave interface unit "terminal slave DSP" sends only uplink interface unit messages 21, 23 and receives only downlink interface unit messages 20, 22. The or each interface unit 19 which sends and receives downlink interface unit messages 20, 22 as well as uplink interface unit messages 21, 23 is a slave interface unit being positioned in the cascade between the master interface unit "master DSP" and the terminal slave interface unit or "terminal slave DSP".

As explained above, for the automatic configuration the following steps are processed in order as mentioned: setting master role on the man machine interface unit 19 where automatic configuration was invoked; forwarding request of automatic configuration and setting slave role on the other man machine interface units 19; automatic configuration of local boiler modules according to the first step by determining the number of burner control units 17, 18 being connected the respective man machine interface unit 19 of the local boiler module; determining if respective further "slave" man machine interface unit 19 in the cascade is present; automatic configuration of the entire cascade of boiler modules by the downlink and uplink interface unit messages according to the second step including the configuration of cascade depth.

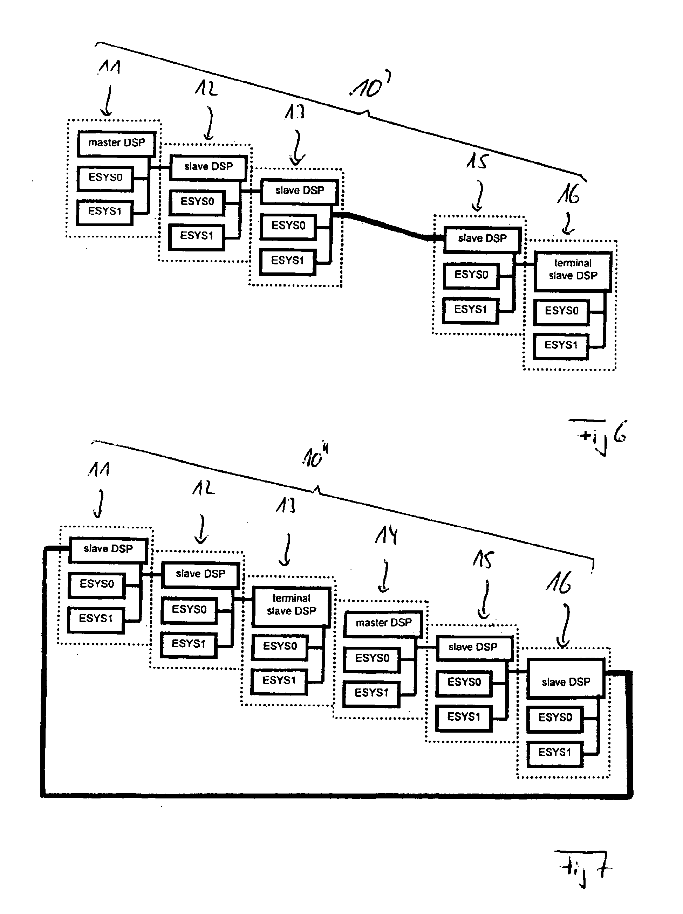

The heating system provides an easy approach to problem solving linked to the serial structure of the cascaded boiler modules 11 to 16 by removing a possible failing boiler module from the cascade without stopping the overall functionality. This can be taken from Fig. 6 showing a heating system 10' with the possible failing boiler module 14 being removed by interconnecting the man machine interface units 19 of the boiler modules 13 and 15.

Thanks to the serial connection of boiler modules in the cascade in case of a failure of the boiler module 14 that will stop the communication in the cascade, the failing boiler module 14 can be easily removed from the cascade in the following way that the man machine interface unit 19 of the boiler module 13 being positioned upward the failing boiler module 14 in the cascade is connected to the man machine interface unit 19 of the boiler module 15 being positioned beneath the failing boiler module 14 in the cascade, and that the automatic configuration is newly started at the "master DSP". In this way heating system 10' will reconfigure and can restart working normally with the only limitation due to reduced power caused by a missing boiler module 14.

In addition, the heating system allows a flexible hierarchical cascade definition due to the fact that every man machine interface units 19 of every boiler module 11 to 16 can be defined as master or slave via simple cabling and automatic configuration.

This can be taken from Fig. 7 showing a heating system 10" in which the man machine interface units 19 of boiler module 14 serves as "master DSP", in which the man machine interface units 19 of boiler module 13 serves as "terminal slave DSP" and in which the man machine interface units 19 of boiler modules 15, 16, 11 and 12 serve each as "slave DSP".

The definition of hierarchy is defined by serial connection between boiler modules in the cascade. The "master DSP" does not have another man machine interface unit 19 connected upwards in the cascade. Each "slave DSP" except the "terminal slave DSP" has a man machine interface unit 19 connected upward in the cascade and has a man machine interface units 19 connected downward in the cascade.

At any time, in case of need, assignment of "master DSP" and "terminal slave DSP" can be changed in the following way that cascade connection cables are changed, and that the automatic configuration is newly started at the respective "master DSP".

As mentioned above, the number of six boiler modules 11 to 16 and the number of two burner control units 17, 18 per boiler module is only an example. Figure 5 shows another embodiment of a heating system 10'" having six boiler modules 11 to 16, whereby each boiler module 11 to 16 comprises one burner control unit 17. Figure 5 shows the heating system 10"' with the logical addresses "0" to "5" of the burner control units 17. It is also possible that each boiler module comprises three or more burner control units. For the embodiment of Figure 5 the automatic configuration works as described above.

After the automatic configuration is finished, the heating system 10, 10', 10" or 10"' exchanges data between the master interface unit or "master DSP" and the burner control units 17, 18 of the boiler modules 11 to 16.

The data exchange after the automatic configuration of the heating system 10, 10', 10" or 10"' is performed in such a way that the master interface unit "master DSP" sends the address, especially the logical address, of the burner control unit 17 or 18 with which data is to be exchanged and waits for reply from the respective burner control unit 17 or 18. E.g. the master interface unit "master DSP" of the heating system 10 of Figures 1 to 4 sends the address "5" which corresponds to the logical address of the burner control unit 18 of the boiler module 13.

If the logical address being sent by the master interface unit "master DSP" corresponds to a physical address of a burner control unit 17, 18 being connected to the "master DSP", said burner control unit 17, 18 sends data to the master interface unit.

In the given example in which the "master DSP" sends the logical address "5" this will not happen, because the logical address "5" does not correspond to an physical address of a burner control unit being connected to the "master DSP".

If the logical address being sent by the master interface unit "master DSP" does not correspond to the physical addresses of the burner control units 17, 18 being connected to the "master DSP", the man machine interface unit 19 being positioned ultimately beneath in the cascade calculates from the logical address being sent by the "master DSP" an intermediate address and send this intermediate address especially towards more distant DSP units from the master man machine interface unit "master DSP". This intermediate address in calculated in such a way that the man machine interface unit 19 being positioned ultimately beneath in the cascade subtracts from the logical address received by the same the number of burner control units being connected to the man machine interface unit 19 sending the logical address and being positioned ultimately upward in the cascade.

In the given example in which the man machine interface unit 19 of the boiler module 11 sends the logical address "5", the man machine interface unit 19 of the boiler module 11 calculates the intermediate address "3" by subtracting from the received logical address "5" the number "2" corresponding to the number of burner control units being connected to "master DSP".

If said intermediate address corresponds to a physical address of a burner control unit 17, 18 being connected to the respective man machine interface unit 19, said burner control unit 17, 18 sends data to the master interface unit trough the respective man machine interface unit 19, if necessary using one or more slave interface units.

If required by communication protocol used, a slave interface unit may modify the intermediate address value of a reply message by the inversion calculation to the calculation mentioned above.

In the given example in which the man machine interface unit 19 of the boiler module 11 sends the logical address "5" and in which the man machine interface unit 19 of the boiler module 12 calculates the intermediate address "3" this will not happen, because the intermediate address "3" does not correspond to a physical address of a burner control unit 17, 18 being connected to the man machine interface unit 19 of the boiler module 12.

If said intermediate address does not correspond to a physical address of a burner control units 17, 18 being connected to the respective man machine interface unit 19, the calculation and sending of such an intermediate address is repeated by the man machine interface unit 19 being positioned beneath in the cascade until the intermediate address corresponds to a physical address of a burner control unit being connected to a man machine interface unit 19 of the heating system.

In the given example in which the man machine interface unit 19 of the boiler module 11 sends the logical address "5" and in which the man machine interface unit 19 of the boiler module 12 calculates the intermediate address "3", the man machine interface unit 19 of the boiler module 13 calculates the intermediate address "1" by subtracting from the received address "3" the number "2" corresponding to the number of burner control units being connected to man machine interface unit 19 of the boiler module 12.

Said intermediate address "1" corresponds to the physical address of the burner control unit 18 being connected to the respective man machine interface unit 19 of the boiler module 13. Said burner control unit 18 sends data to the master interface unit trough the man machine interface units 19 of boiler module 13 and 12. If the reply message is equipped by address, then the address value is incremented on every "slave DSP" by a number equal to detected burner controllers of the respective man machine interface 19 being positioned upward in the cascade.

Mainly when the cascade of boiler modules becomes longer and longer with an increasing number of boiler modules connected in series, the communication can suffer of slow data available to the "master DSP". This is basically due to the fact that data which has to be transmitted/read to/from last boiler module in the cascade must flow through all previous man machine interface units 19 being positioned upward in the cascade. To overcome such a situation memory cache is implemented into every man machine interface unit 19.

The memory cache of each man machine interface unit 19 stores data from or for the burner control units 17, 18 being connected to the respective man machine interface unit 19 and data from or for the burner control units 17, 18 being connected to the man machine interface units 19 positioned beneath in the cascade. E.g. the memory cache of the man machine interface unit 19 of boiler module 16 stores data of the burner control units 17, 18 being connected to the man machine interface units 19 of boiler module 16.

The memory cache of the man machine interface unit 19 of e.g. boiler module 14 stores data of the burner control units 17, 18 being connected to the man machine interface units 19 of boiler modules 14, 15 and 16.

The data being stored in the memory cache of each man machine interface unit 19 is a subset of the entire set of data to be exchanged. The data being stored in the memory cache of a specific man machine interface unit 19 becomes transmitted up to the man machine interface unit 19 positioned ultimately upward in the cascade thereby refreshing the memory cache of the same. Refreshing the memory cache is done on regular basis on every man machine interface unit 19.

The data not being stored in the memory cache of a man machine interface unit 19 becomes transmitted or forwarded to the master interface unit by cascading principle.

The memory cache in each "slave DSP" stores a mirror of incoming and outgoing data, which are periodically communicated from "master DSP". Each "slave DSP" periodically refreshes a given list of data from/to burner control units 17, 18. When a man machine interface unit 19 receives data via external communication for reading/writing data which is mirrored in memory cache, then the operation is done on memory cache data only. Memory cache in "master DSP" can be used as storage of status data for all of burner control units in the cascade.

The memory cache of "slave DSP" don't have any information about burner control units 17, 18 in upper stages of the cascade, but have data from all burner control units 17, 18 and burner control units 17, 18 accessed via "slave DSPs" below in the cascade. During memory cache access or forwarding data not being in memory cache address number is decremented by number of neighboring burner control units 17, 18 with "slave DSP".

Data stored in memory cache may have their own timestamp, which is causing their invalidating after certain timeout from the last refreshing. Also detection of permanent communication loss in part of the cascade is causing invalidation of respective status information in memory cache.

It should be noted that the above described automatic configuration as well as the data exchange after automatic configuration works also in case the heating system comprises only one boiler module. In this case there is only one machine interface unit serving at the same time as "master DSP" and "terminal slave DSP". This solution is defined in claims 15 and 16.

### List of reference signs

- 10, 10', 10", 10"': heating system
- 11: boiler module
- 12: boiler module
- 13: boiler module
- 14: boiler module
- 15: boiler module
- 16: boiler module
- 17: burner control unit
- 18: burner control unit
- 19: man machine interface unit
- 20: downlink interface unit message
- 21: uplink interface unit message
- 22: downlink interface unit message
- 23: uplink interface unit message

## Claims

1. Heating system comprising a plurality of boiler modules, namely at least two boiler modules,
A1) wherein each boiler module (11, 12, 13, 14, 15, 16) comprises at least one burner, at least one burner control unit (17, 18) for controlling the respective burner and one man machine interface unit (19) being connected to the or each burner control unit (17, 18);
A2) wherein the boiler modules (11, 12, 13, 14, 15, 16) are cascaded in such a way that all man machine interface units (19) are connected in series, whereby one of said man machine interface units (19) serves as master interface unit and whereby the other man machine interface units (19) serve as slave interface units;
A3) wherein the heating system performs an automatic configuration of the cascaded boiler modules (11, 12, 13, 14, 15, 16) after establishing the cascaded connection of the same, whereby
A31) each man machine interface unit (19) determines the number of burner control units (17, 18) being connected the respective man machine interface unit (19),
A32) each man machine interface unit (19) determines the presence of a neighbouring machine interface unit (19) being connected the respective man machine interface unit (19), and
A33) the master interface unit determines the total number of burner control units (17, 18) in the heating system.

2. System as claimed in claim 1, **characterized in that** the master interface unit further determines the number of the man machine interface units (19) being connected in series and the position of the same within the cascade.

3. System as claimed in claim 1 or 2, **characterized in that** the boiler modules (11, 12, 13, 14, 15, 16) are cascaded in series in such a way that one of said man machine interface units (19) serves as master interface unit and the other man machine interface units (19) serve as slave interface units, whereby one of said slave interface units serves as terminal salve interface unit.

4. System as claimed in one of claims 1 to 3, **characterized in that** each boiler module (11, 12, 13, 14, 15, 16) comprises a first burner control unit (17) having a first physical address, especially the physical address 0, and, if present, a second burner control unit (18) having a second physical address, especially the physical address 1, and if present, any further burner control unit with an incrementally assigned physical address.

5. System as claimed in one of claims 1 to 4, **characterized in that** the automatic configuration of the cascaded boiler modules (11, 12, 13, 14, 15, 16) is performed in two subsequent steps, wherein:
B1) within a first step each man machine interface unit (19) determines the number of burner control units (17, 18) being connected the respective man machine interface unit (19) and checks the presence of a neighbouring machine interface unit (19) being positioned ultimately beneath in the cascade;
B2) within a second step downlink interface unit messages (20) and uplink interface unit messages (21) are exchanged between the cascaded man machine interface units (19) in such a way that
B21) each man machine interface unit (19) except for the terminal slave interface unit sends a downlink interface unit message (20) to the man machine interface unit (19) being positioned ultimately beneath in the cascade, wherein said downlink interface unit message (20) corresponds to the number of burner control units (17, 18) being connected to the respective man machine interface unit (19);
B22) each man machine interface unit (19) except for the master interface unit sends an uplink interface unit message (21) to the man machine interface unit (19) being positioned ultimately upward in the cascade, wherein said uplink interface unit message (21) corresponds to the sum of the number of burner control units (17, 18) being connected to the respective man machine interface unit (19) and the number of all man machine interface units (19) being positioned beneath the same in the cascade.

6. System as claimed in claim 5, **characterized in that** within the second step additional downlink interface unit messages (22) and additional uplink interface unit messages (23) are exchanged between the cascaded man machine interface units (19) in such a way that
B3) each man machine interface unit (19) except for the terminal slave interface unit sends a downlink interface unit message (22) to the man machine interface unit (19) being positioned ultimately beneath in the cascade, wherein said downlink interface unit message (21) corresponds to the position of the respective man machine interface unit (19) in the cascade;
B4) each man machine interface unit (19) except for the master interface unit sends an uplink interface unit message (23) to the man machine interface unit (19) being positioned ultimately upward in the cascade, wherein said uplink interface unit message (23) corresponds to the number of the man machine interface units (19) in the cascade.

7. System as claimed in claim 5 or 6, **characterized in that** the master interface unit sends only downlink interface unit messages (20, 22) and receives only uplink interface unit messages (21, 23), that the terminal slave interface unit sends only uplink interface unit messages (21, 23) and receives only downlink interface unit messages (20, 22), and that the or each interface unit (19) which sends and receives downlink interface unit messages (20, 22) as well as uplink interface unit messages (21, 23) is a slave interface unit being positioned in the cascade between the master interface unit and the terminal slave interface unit.

8. System as claimed in one of claims 1 to 7, **characterized in that** the master interface unit generates from the interface unit messages (20, 21, 22, 23) for each burner control unit (17, 18) a logical address within the cascade which increases with it's distance from the master interface unit.

9. System as claimed in one of claims 1 to 8, **characterized in that** the man machine interface unit (19) at which the automatic configuration is initiated becomes the master interface unit, wherein the master interface unit sends to the other cascaded man machine interface units (19) an automatic configuration request, and wherein the man machine interface units (19) which receive that request become slave interface units.

10. System as claimed in one of claims 1 to 9, **characterized in that** after the automatic configuration is finished the heating system exchanges data between the master interface unit and the burner control units (17, 18) in such a way that
C1) the master interface unit sends the address, especially the logical address, of the burner control unit (17, 18) with which data is to be exchanged and waits for reply from the respective burner control unit;
C2) if the address being sent by the master interface unit corresponds to an address, especially a physical address, of a burner control unit (17, 18) being connected to the same, said burner control unit sends data to the master interface unit;
C3) if the address being sent by the master interface unit does not correspond to the addresses of the burner control units (17, 18) being connected to the same, the man machine interface unit (19) being positioned ultimately beneath in the cascade calculates from the address being sent by the master interface unit an intermediate address and sends this intermediate address;
C4) if said intermediate address corresponds to an address, especially a physical address, of a burner control unit (17, 18) being connected to the respective man machine interface unit, said burner control unit sends data to the master interface unit;
C5) if said intermediate address does not correspond to an address of the burner control units being connected to the respective man machine interface unit, steps C3) and C4) are repeated until the intermediate address correspond to an address of a burner control unit (17, 18).

11. System as claimed in one of claims 1 to 10, **characterized in that** each man machine interface unit (19) comprises a memory cache.

12. System as claimed in claim 11, **characterized in that** the memory cache of each man machine interface unit (19) stores data from or for the burner control units (17, 18) being connected to the respective man machine interface unit (19) and, if present, data from or for the or each burner control unit (17, 18) being connected to the man machine interface units (19) positioned beneath in the cascade.

13. System as claimed in claim 12, **characterized in that** data being stored in the memory cache of each man machine interface unit (19) is a subset of the entire set of data to be exchanged and becomes transmitted up to the man machine interface unit positioned ultimately upward in the cascade thereby refreshing the memory cache of the same regularily.

14. System as claimed in claim 13, **characterized in that** data not being stored in the memory cache of each man machine interface unit (19) becomes transmitted from to the master interface unit to respective boiler control units and from boiler control units to the master interface unit as defined in claim 10.

15. Heating system comprising one boiler module,
A1) wherein the boiler module comprises at least one burner, at least one burner control unit (17, 18) for controlling the respective burner and one man machine interface unit (19) being connected to the or each burner control unit (17, 18);
A2) wherein the heating system performs an automatic configuration of the boiler module, whereby
A21) the man machine interface unit (19) determines the number of burner control units (17, 18) being connected the man machine interface unit (19),
A22) the man machine interface unit (19) determines the non-presence of a neighbouring machine interface unit (19) being connected the respective man machine interface unit (19), and
A23) the machine interface unit (19) determines the total number of burner control units (17, 18) in the heating system equal to number of burner control units (17, 18) being connected the man machine interface unit (19) described in feature A21).

16. System as claimed in claim 15, **characterized by** the features of one of claims 4, 10, 11 and 12.
